# EUROPÄISCHE PATENTSCHRIFT

(11) **EP 2 886 842 B1**
(45) Veröffentlichungstag und Bekanntmachung des Hinweises auf die Patenterteilung: **18.05.2016**
(21) Anmeldenummer: 14194730.9
(22) Anmeldetag: 25.11.2014
(51) Int. Cl.: F02K 1/56, F02K 1/72, F02K 1/76

(54) **Fluggasturbine mit einer Schubumkehrvorrichtung mit Kaskadenelementen und integriertem Zahnstangenantrieb**
Aircraft gas turbine with thrust reverser with cascade elements and integrated rack and pinion type drive
Turbine à gaz d'aéronef équipée d'un dispositif d'inverseur de poussée ayant des éléments en cascade et un entraînement à crémaillère intégrée

(30) Priorität: 19.12.2013 DE 102013226767
(43) Veröffentlichungstag der Anmeldung: 24.06.2015
(73) Patentinhaber: Rolls-Royce Deutschland Ltd & Co KG, 15827 Blankenfelde-Mahlow (DE); Liebherr-Aerospace Lindenberg GmbH, 88161 Lindenberg (DE)
(72) Erfinder: TODOROVIC, Predrag, 10437 Berlin (DE); BÄR, Josef, 87448 Waltenhofen (DE); MÜLLER, Frank, 88161 Lindenberg/Allgäu (DE); SCHUMANN, Uwe, 88069 Tettnang (DE)
(74) Vertreter: Hoefer & Partner Patentanwälte mbB

(56) Entgegenhaltungen:
- DE-A1-102011 008 917
- US-A- 2 570 629
- US-A- 3 500 646
- US-A- 3 829 020
- US-A- 4 005 822
- US-A- 5 211 008
- US-A1- 2013 062 433

## Beschreibung

Die Erfindung bezieht sich auf eine Fluggasturbine gemäß den Merkmalen des Oberbegriffs des Anspruches 1.

Im Einzelnen bezieht sich die Erfindung auf eine Fluggasturbine mit einer am hinteren Bereich einer Triebwerksverkleidung angeordneten Schubumkehrvorrichtung, welche mehrere am Umfang verteilte, eine Strömung umlenkende petal-Kaskadenelemente umfasst.

Aus dem Stand der Technik sind eine Vielzahl von unterschiedlichen Ausgestaltungen von Schubumkehrvorrichtungen bekannt, bei welchen Kaskadenelemente oder Türen verschoben oder verschwenkt werden. Dabei sind die einzelnen Elemente jeweils mit Gleitlagerungen gelagert, welche eine gleitende Längsverschiebung längs Schienen oder Kulissenelementen bewirken. Derartige Verschiebemechanismen mit Gleitelementen weisen den Nachteil auf, dass sie eine erhebliche Reibung haben, so dass sich große Reaktionskräfte einstellen.

Bei den aus dem Stand der Technik bekannten Grundprinzipien erfolgt zunächst eine Verschiebung eines hinteren Bereichs der Triebwerksverkleidung, um einen im Wesentlichen ringförmigen Freiraum zu schaffen, in welchen dann die Schubumkehrtüren eingeschwenkt werden können. Derartige Konstruktionen zeigen beispielsweise die US 2010/0139242 A1, die US 4,356,973 oder die US 5,209,057 A. Dabei ist zu erkennen, dass die Antriebsvorrichtung dazu verwendet wird, den hinteren Bereich der Triebwerksverkleidung zu verschieben. Bereits hierbei ergeben sich die oben genannten Probleme mit einem Verklemmen durch unterschiedliche Reibung und/oder unterschiedliche Belastung. Es ist somit erforderlich, die Gesamtstrukturen sehr stabil auszubilden und bei der Fertigung geringe Toleranzen vorzusehen, um die Funktionalität aufrechtzuerhalten. All dies führt zu einem hohen fertigungstechnischen Aufwand, zu erhöhtem Gewicht und zu hohen Kosten.

Weiterhin ist es bei den aus dem Stand der Technik bekannten Konstruktionen erforderlich, Maßnahmen zu ergreifen, die eine gleichmäßige Verschiebung des hinteren Bereichs der Triebwerksverkleidung und eine gleichmäßige Betätigung der Schubumkehrtüren sicherstellen. Auch dies führt zu einem hohen apparatetechnischen Aufwand.

Die DE 10 2011 008 917 A1 beschreibt eine Fluggasturbine mit einer am hinteren Bereich einer Triebwerksverkleidung angeordneten Schubumkehrvorrichtung. Dabei sind mehrere am Umfang verteilte Kaskadenelemente vorgesehen. Die Kaskadenelemente sind zwischen einer Flugposition und einer Schubumkehrposition in Axialrichtung verschiebbar. Hierzu sind die Kaskadenelemente auf Schienen gelagert und weisen Rollen auf, welche längs der Schienen laufen.

Aus der US 2 570 629 A ist es bekannt, einen Schubdüsenantrieb einer Fluggasturbine axial verschiebbar auszubilden. Die Axialverschiebung erfolgt über einen zentrischen Zahnstangenantrieb.

Der Erfindung liegt die Aufgabe zugrunde, eine Fluggasturbine mit einer in der Triebwerksverkleidung angeordneten Schubumkehrvorrichtung (petal cascades TRU type) zu schaffen, welche bei einfachem Aufbau und einfacher, kostengünstiger Herstellbarkeit die Nachteile des Standes der Technik vermeidet und eine betriebssichere Betätigung gewährleistet.

Erfindungsgemäß wird die Aufgabe durch die Merkmalskombination des Anspruchs 1 gelöst, die Unteransprüche zeigen weitere vorteilhafte Ausgestaltungen der Erfindung.

Der erfindungsgemäßen Lösung liegt somit das Grundprinzip zugrunde, einen Zahnstangenantrieb zu verwenden, um die Kaskadenelemente zu betätigen. Durch einen derartigen Zahnstangenantrieb wird sichergestellt, dass die Kaskadenelemente alle in gleicher Weise betätigt werden können. Durch die Koppelung zwischen einem Antrieb und den Zahnstangen und den zugehörigen Zahnrädern wird vermieden, dass der Antrieb insgesamt klemmen kann und/oder dass die einzelnen Kaskadenelemente unterschiedlich verschoben oder bewegt werden (Die Antriebskraft liegt in gleicher Linie wie der Verschiebemechanismus). Hierdurch erhöht sich die Betriebssicherheit ganz erheblich. Zum anderen ist es möglich, auf redundante Antriebsmittel oder Überwachungsmaßnahmen zu verzichten.

Das erfindungsgemäße Grundprinzip sieht weiterhin vor, dass die petal-Kaskadenelemente infolge ihrer Bewegung (Verschiebung und/oder Verschwenkung) den hinteren Bereich der Triebwerksverkleidung verschieben. Somit ist kinematisch ein anderes Lösungsprinzip geschaffen worden, als beim Stand der Technik, bei dem der hintere Bereich der Triebwerksverkleidung verschoben wird und, abhängig von dieser Verschiebung, petal-Kaskadenelemente oder Schubumkehrtüren verschwenkt oder betätigt werden. Auch hierdurch ergibt sich erfindungsgemäß eine einfachere Funktion und ein hohes Maß an Betriebssicherheit.

Im Einzelnen ist somit erfindungsgemäß vorgesehen, dass die petal-Kaskadenelemente verschiebbar gelagert sind, dass auf einer oder an beiden Seiten jedes petal-Kaskadenelements eine Zahnstange ausgebildet ist, welche über ein jeweiliges, mit einer Antriebsvorrichtung gekoppeltes Zahnrad, welche verschiebbar sind, und dass jedes petal-Kaskadenelement über zumindest ein Kopplungselement mit einem hinteren Bereich der Triebwerksverkleidung zu deren Verschiebung in Axialrichtung verbunden ist.

Da erfindungsgemäß an den beiden Umfangsseitenbereichen der petal-Kaskadenelemente jeweils zumindest eine Zahnstange angeordnet ist, und da die jeweiligen Zahnräder synchronisiert zueinander mittels einer einzigen Antriebsvorrichtung (Motor) gedreht werden, ergibt sich ein verklemmungsfreier Bewegungsablauf der petal-Kaskadenelemente. Alternativ ist es auch möglich, zwei Zahnstangen vorzusehen. Die Kopplung der petal-Kaskadenelemente mittels der Kopplungselemente mit dem hinteren Bereich der Triebwerksverkleidung führt zu einer betriebssicheren Verschiebung des hinteren Bereichs der Triebwerksverkleidung.

Um die petal-Kaskadenelemente zu verschieben und von einer nicht betätigten Position in eine Schubumkehrposition zu bringen, können die Zahnstangen entweder gerade oder gebogen ausgebildet sein. Der Begriff der Verschiebung der petal-Kaskadenelemente kann somit eine geradlinige Verschiebung oder auch eine Verschiebung längs einer bogenförmigen Bewegungsbahn umfassen.

In besonders vorteilhafter Ausgestaltung der Erfindung ist vorgesehen, dass die Antriebswellen mittels Kardangelenken miteinander verbunden sind. Hierdurch wird eine synchronisierte Drehung gewährleistet. Besonders günstig ist es weiterhin, wenn die Antriebswellen und der Motor einen sich um den Umfang der Triebwerksverkleidung bzw. des Triebwerks erstreckenden, geschlossenen Antriebsring bilden.

Zur Verbesserung der Antriebsleistung kann es günstig sein, wenn der Motor als Getriebemotor ausgebildet ist. Weiterhin können die Zahnräder jeweils ein Getriebe oder ein Planetengetriebe umfassen, so dass die Umfangsgeschwindigkeit der Verzahnung geringer ist, als die Rotationsgeschwindigkeit der Antriebswellen.

Als Alternative zu den Antriebswellen, welche mittels Kardangelenken miteinander verbunden sind, gibt es die Möglichkeit, auch mehrere Elektromotoren (Schrittmotoren) mit integriertem Planetengetriebe als einzelne Einheiten pro jeder Petal-Kascade zu benutzen und synchronisiert elektronisch zu betätigen.

Die erfindungsgemäßen Zahnstangen des jeweiligen petal-Kaskadenelements sind bevorzugterweise einstückig mit dem petal-Kaskadenelement ausgebildet, bevorzugterweise während des Gesamtherstellungsvorgangs der petal-Kaskadenelemente.

Besonders vorteilhaft ist es, wenn die zentrale Antriebseinheit (Motor) mit zumindest einer Bremse versehen ist. Durch die erfindungsgemäße Lösung ergibt sich somit eine Gesamtkonstruktion, welche ein geringes Gewicht aufweist, welche kostengünstig herstellbar ist und welche unter Vermeidung der Gefahr von Verklemmen ein betriebssicheres Betätigen der Schubumkehrvorrichtung ermöglicht.

Es versteht sich, dass um den Umfang verteilt auch mehrere Motoren vorgesehen sein können, welche mit den Antriebswellen und untereinander gekoppelt sind. Wichtig ist, dass sich ein geschlossener, kreisförmiger Antriebsstrang ergibt.

Nachfolgend wird die Erfindung anhand eines Ausführungsbeispiels in Verbindung mit der Zeichnung beschrieben. Dabei zeigt:
- Fig. 1: eine perspektivische Teilansicht einer an einem Flügel eines Flugzeugs montierten erfindungsgemäßen Fluggasturbine,
- Fig. 2: eine perspektivische Teilansicht der erfindungsgemäßen petal-Kaskadenelemente mit zugeordneter Antriebsvorrichtung,
- Fig. 3: eine vergrößerte Detailansicht zweier petaf-Kaskadenelemente mit Zahnstangen und Zahnrädern sowie Antriebswellen,
- Fig. 4: eine stirnseitige Schnittansicht des erfindungsgemäßen Ausführungsbeispiels,
- Fig. 5: eine perspektivische Teil-Ansicht zur Darstellung der petal-Kaskadenelemente,
- Fig. 6: eine Ansicht, analog Fig. 5, zur Darstellung des geschlossenen Antriebsstrangs, und
- Fig. 7: eine schematische Darstellung des erfindungsgemäßen Aufbaues.

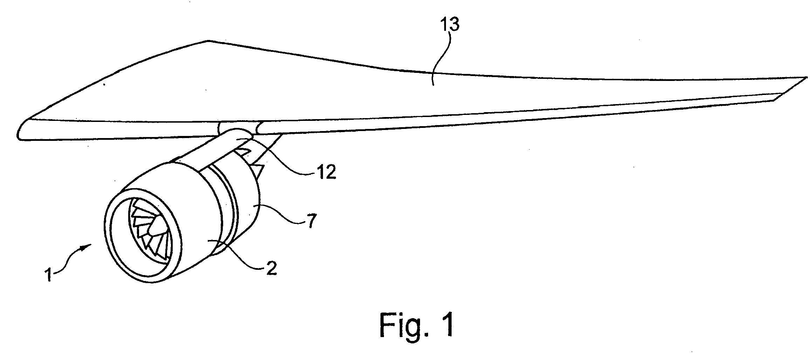

Die Fig. 1 zeigt eine Fluggasturbine 1, welche in üblicher Weise mit einer Triebwerksverkleidung 2 versehen ist. Die Triebwerksverkleidung 2 weist einen hinteren Bereich 7 auf, der zur Schubumkehr axial, bezogen auf die Triebwerksachse, verschiebbar ist. Die Gasturbine 1 ist mittels eines Pylons 12 an einem Flügel 13 aufgehängt, so wie dies aus dem Stand der Technik bekannt ist.

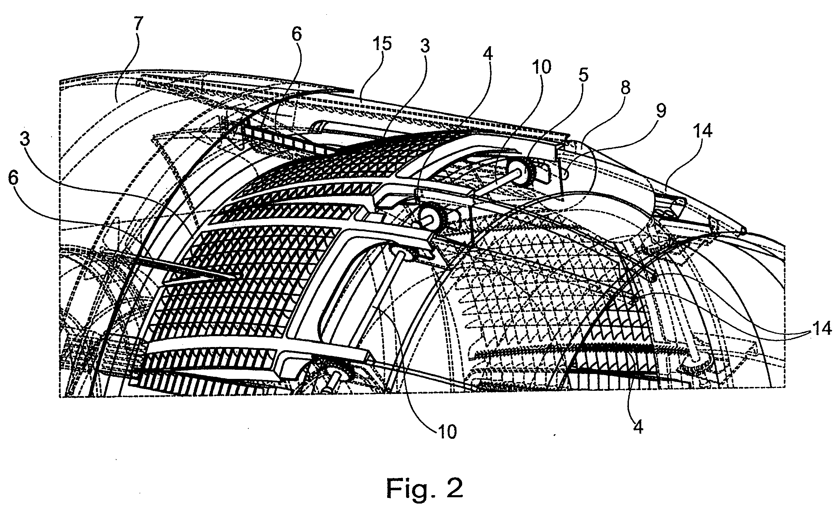

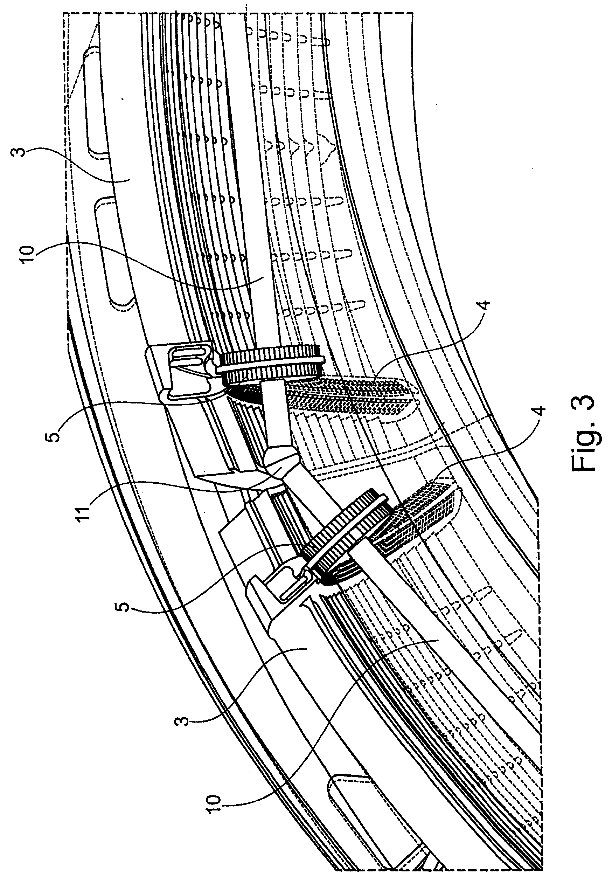

Die Fig. 2 und 3 zeigen jeweils in perspektivischer Darstellung petal-Kaskadenelemente 3. Die petal-Kaskadenelemente 3 umfassen eine Vielzahl von im Einzelnen nicht gezeigten Umlenkbereichen, durch welche Luft aus dem Nebenstromkanal zur Schubumkehr umgeleitet wird. Derartige petal-Kaskadenelemente 3 sind aus dem Stand der Technik bekannt.

Die petal-Kaskadenelemente 3 sind an ihren Seitenbereichen jeweils an Führungsschienen 14 gelagert. Diese können geradlinig oder gebogen ausgebildet sein. Weiterhin weisen die petal-Kaskadenelemente 3 an ihren seitlichen Bereichen Zahnstangen 4 auf, welche mit Zahnrädern 5 kämmen. Wie beispielsweise in Fig. 3 dargestellt, kann die Zahnstange 4 zweiseitig ausgebildet sein, so dass das Zahnrad 5 mit beidseitigen Verzahnungen mit der Zahnstange 4 kämmt.

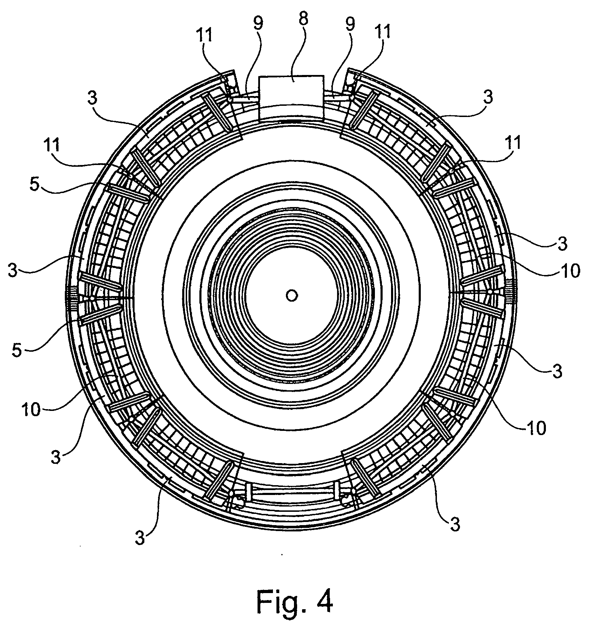

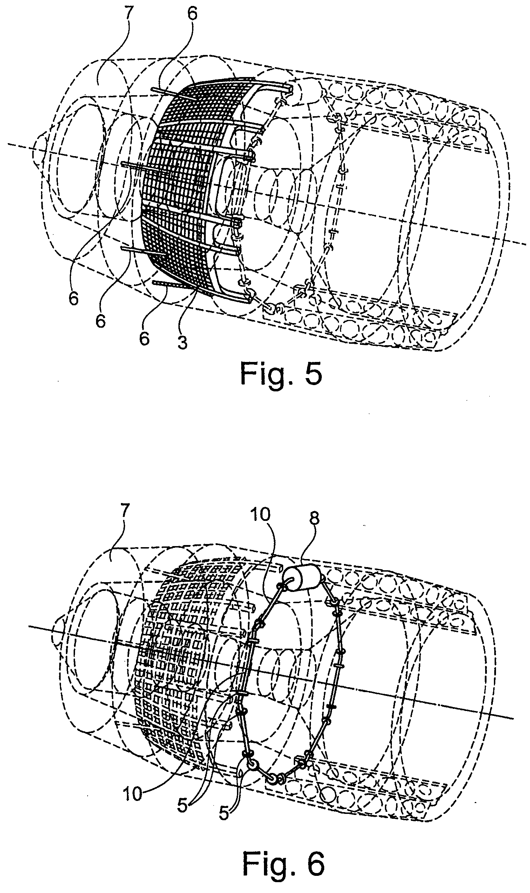

Die Zahnräder 5 sind jeweils drehfest auf Antriebswellen 10 gelagert. Die einzelnen Antriebswellen 10 sind über Kardangelenke, Kegelräder, Gleichlaufgelenke oder Winkelgetriebe 11, welche eine Umlenkvorrichtung bilden, drehfest verbunden, so dass sich, wie in den Fig. 4 und 6 dargestellt, ein im Wesentlichen kreisringförmiger, geschlossener Antriebsstrang ergibt. Dieser Antriebsstrang umfasst einen Motor 8, welcher als Hydraulikmotor oder Elektromotor ausgebildet sein kann und auch ein Getriebe umfassen kann und welcher eine zentrale Antriebseinheit bildet. Die beiden seitlichen Abtriebswellen 9 des Motors 8 sind ebenfalls über Kardangelenke 11 mit den benachbarten Antriebswellen 10 verbunden.

Erfindungsgemäß treibt der Motor 8 somit die einzelnen Antriebswellen 10 und die mit diesen gekoppelten Zahnräder 5 an, um die petal-Kaskadenelemente 3, welche sich um den Umfang erstreckend angeordnet sind (s. Fig. 5) zu verschieben.

Die petal-Kaskadenelemente 3 sind jeweils mittels Kopplungselementen 6 mit dem hinteren Bereich 7 der Triebwerksverkleidung 2 verbunden, so wie dies beispielsweise in den Fig. 2 und 5 dargestellt ist. Der hintere Bereich 7 der Triebwerksverkleidung 2 ist an im Einzelnen nicht dargestellten Schienen 15 gelagert, so dass dieser in Axialrichtung verschiebbar ist. Somit führt eine Betätigung des Motors 8 nicht nur zu einer zwangsgekoppelten und gleichmäßigen Bewegung der einzelnen petal-Kaskadenelemente, sondern auch zu einer Axialverschiebung des hinteren Bereichs der Triebwerksverkleidung.

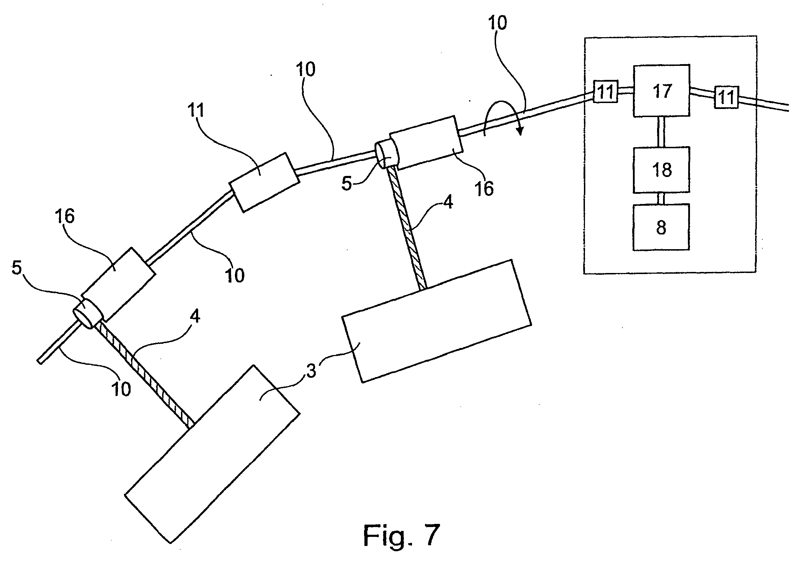

Die Fig. 7 zeigt eine schematische Darstellung des Ausführungsbeispiels gemäß den Fig. 2 bis 6. Dabei ist insbesondere nochmals verdeutlicht, dass der Motor 8 über eine Bremse 18 mit einem Getriebe 17 versehen ist, dessen Ausgangswellen jeweils mit einer Umlenkvorrichtung 11 verbunden sind. Weiterhin ist das bereits erwähnte, dem Zahnrad 5 zugeordnete oder in dieses integrierte Getriebe 16 schematisch dargestellt. Die Drehzahl des Motors kann kleiner 6000 1/min sein, das Drehmoment kann kleiner 300 Nm sein. Die Antriebswellen 10 können als feste Wellen, als Ketten, als Flexwellen, als Zahnkranz oder als Zahnriemen ausgebildet sein.

### Bezugszeichenliste:

- 1: Fluggasturbine
- 2: Triebwerksverkleidung
- 3: petal-Kaskadenetement
- 4: Zahnstange
- 5: Zahnrad
- 6: Kopplungselement
- 7: hinterer Bereich
- 8: Motor (zentrale Antriebseinheit)
- 9: Abtriebswelle
- 10: Antriebswelle
- 11: Kardangelenk / Winkelgetriebe / Umlenkvorrichtung
- 12: Pylon
- 13: Flügel
- 14: Führungsschiene
- 15: Schiene
- 16: Getriebe
- 17: Getriebe
- 18: Bremse

## Patentansprüche

1. Fluggasturbine mit einer am hinteren Bereich einer Triebwerksverkleidung (2) angeordneten Schubumkehrvorrichtung, welche mehrere am Umfang verteilte, eine Strömung umlenkende Kaskadenelemente (3) umfasst, wobei die Kaskadenelemente (3) verschiebbar gelagert sind, und wobei jedes Kaskadenelement (3) über zumindest ein Kopplungselement (6) mit einem hinteren Bereich (7) der Triebwerksverkleidung (2) zu deren Verschiebung in Axialrichtung verbunden ist, **dadurch gekennzeichnet, dass** an beiden Seiten jedes Kaskadenelements (3) zumindest eine Zahnstange (4) ausgebildet ist, welche über ein jeweiliges, mit einer Antriebsvorrichtung gekoppeltes Zahnrad (5) verschiebbar ist, dass die Antriebsvorrichtung zumindest eine zentrale Antriebseinheit (8) umfasst, deren Abtriebswelle (9) mit mehreren drehfest miteinander gekoppelten Antriebswellen (10), auf welchen die Zahnräder (5) befestigt sind, verbunden ist und dass die Antriebswellen (10) und die zentrale Antriebseinheit (8) einen sich um den Umfang der Triebwerksverkleidung erstreckenden, geschlossenen Antriebsring bilden.

2. Fluggasturbine nach Anspruch 1, **dadurch gekennzeichnet, dass** die Antriebswellen (10) mittels Umlenkvorrichtungen (11) miteinander verbunden sind.

3. Fluggasturbine nach einem der Ansprüche 1 oder 2, **dadurch gekennzeichnet, dass** die Krafteinleitung für den Zahnstangenantrieb jeweils ein Getriebe umfasst.

4. Fluggasturbine nach Anspruch 3, **dadurch gekennzeichnet, dass** das Getriebe als Planetengetriebe ausgebildet ist, welches in das jeweilige Zahnrad integriert ist.

5. Fluggasturbine nach einem der Ansprüche 1 bis 4, **dadurch gekennzeichnet, dass** die zentrale Antriebseinheit (8) ein Getriebe umfasst.

6. Fluggasturbine nach einem der Ansprüche 1 bis 5, **dadurch gekennzeichnet, dass** die zentrale Antriebseinheit (8) eine Bremse umfasst.

7. Fluggasturbine nach einem der Ansprüche 1 bis 6, **dadurch gekennzeichnet, dass** die Zahnstangen (4) gerade oder bogenförmig ausgebildet sind.

8. Fluggasturbine nach einem der Ansprüche 1 bis 7, **dadurch gekennzeichnet, dass** die Antriebswelle (10) als Welle, als Flexwelle, und/oder als Zahnkranz ausgebildet ist.

## Claims

1. Aircraft gas turbine having a thrust-reversing device arranged at the rear area of an engine cowling (2) and including multiple cascade elements (3) that are distributed around the circumference and deflect a flow, where the cascade elements (3) are mounted in a displaceable manner, and where each cascade element (3) is connected to a rear area (7) of the engine cowling (2) via at least one coupling element (6) for the purpose of displacing the engine cowling (2) in the axial direction, **characterized in that** on both sides of each cascade element (3) at least one gear rack (4) is formed which can be displaced via a respective gear (5) that is coupled to a driving device, that the driving device includes at least one central drive unit (8), the driven shaft (9) of which is connected to multiple drive shafts (10) that are coupled in a torque-proof manner to one another and on which the gears (5) are attached, and that the drive shafts (10) and the central drive unit (8) form a closed drive ring which extends around the circumference of the engine cowling.

2. Aircraft gas turbine in accordance with Claim 1, **characterized in that** the drive shafts (10) are connected to one another by means of deflection devices (11).

3. Aircraft gas turbine in accordance with one of the Claims 1 or 2, **characterized in that** each force introduction mechanism for the rack and pinion drive includes one gear unit.

4. Aircraft gas turbine in accordance with Claim 3, **characterized in that** the gear unit is designed as a planetary gear, which is integrated into the respective gear.

5. Aircraft gas turbine in accordance with one of the Claims 1 to 4, **characterized in that** the central drive unit (8) includes a gear unit.

6. Aircraft gas turbine in accordance with one of the Claims 1 to 5, **characterized in that** the central drive unit (8) includes a break.

7. Aircraft gas turbine in accordance with one of the Claims 1 to 6, **characterized in that** the gear racks (4) are designed straight or curved.

8. Aircraft gas turbine in accordance with one of the Claims 1 to 7, **characterized in that** the drive shaft (10) is designed as a shaft, as a flexible shaft and/ or as a gear rim.

## Revendications

1. Turbine à gaz aéronautique avec un inverseur de poussée disposé dans la partie arrière d'un carénage de moteur (2), ledit inverseur comprenant plusieurs éléments en cascade (3) répartis sur le pourtour et déviant un écoulement, sachant que les éléments en cascade (3) sont logés de manière mobile et que chaque élément en cascade (3) est relié par au moins un élément de couplage (6) à une partie arrière (7) du carénage de moteur (2), pour permettre son déplacement dans le sens axial, **caractérisée en ce que** des deux côtés de chaque élément en cascade (3) est formée au moins une crémaillère (4) qui peut être déplacée au moyen d'une roue dentée (5) respective, couplée à un dispositif d'entraînement, que le dispositif d'entraînement comprend au moins une unité centrale d'entraînement (8) dont l'arbre mené (9) est relié à plusieurs arbres menant (10) couplés entre eux de manière solidaire en rotation, sur lesquels sont fixées les roues dentées (5), et que les arbres menant (10) et l'unité centrale d'entraînement (8) forment un anneau d'entraînement fermé s'étendant sur le pourtour du carénage de moteur.

2. Turbine à gaz aéronautique selon la revendication n° 1, **caractérisée en ce que** les arbres menant (10) sont reliés entre eux au moyen de dispositifs de renvoi (11).

3. Turbine à gaz aéronautique selon une des revendications n° 1 ou n° 2, **caractérisée en ce que** chaque mécanisme d'introduction de force pour l'entraînement à crémaillère comprend un engrenage.

4. Turbine à gaz aéronautique selon la revendication n° 3, **caractérisée en ce que** l'engrenage est conçu en tant qu'engrenage planétaire intégré dans la roue dentée respective.

5. Turbine à gaz aéronautique selon une des revendications n° 1 à n° 4, **caractérisée en ce que** l'unité centrale d'entraînement (8) comprend un engrenage.

6. Turbine à gaz aéronautique selon une des revendications n° 1 à n° 5, **caractérisée en ce que** l'unité centrale d'entraînement (8) comprend un frein.

7. Turbine à gaz aéronautique selon une des revendications n° 1 à n° 6, **caractérisée en ce que** les crémaillères (4) sont rectilignes ou arquées.

8. Turbine à gaz aéronautique selon une des revendications n° 1 à n° 7, **caractérisée en ce que** l'arbre menant (10) est conçu en tant qu'arbre, qu'arbre flexible et/ ou en tant que couronne dentée.
